# EUROPEAN PATENT APPLICATION

(11) **EP 1 557 615 A1**
(43) Date of publication of application: **27.07.2005**
(21) Application number: 03809843.0
(22) Date of filing: 03.09.2003
(51) Int. Cl.: F24F 1/00, B01D 53/22

(54) **GAS ENRICHMENT DEVICE AND BLOWING DEVICE USING THE DEVICE**

(30) Priority: 31.10.2002 JP 2002318177; 31.10.2002 JP 2002318179
(71) Applicant: MATSUSHITA ELECTRIC INDUSTRIAL CO., LTD., Kadoma-shi, Osaka 571-8501 (JP)
(72) Inventor: NISHIHARA, Yoshikazu, Koka-gun, Shiga 529-1851 (JP); NAKAMURA, Yasuhiro, Ritto-shi, Shiga 520-3031 (JP); ASADA, Noriya, Kyoto-shi, Kyoto 607-8168 (JP); TAKEUCHI, Atsushi, Otsu-shi, Shiga 520-0024 (JP); ARASHIMA, Hiroshi, Otsu-shi, Shiga 520-2145 (JP); SHIMA, Nobuki, Yasu-gun, Shiga 520-2435 (JP)
(74) Representative: Grünecker, Kinkeldey, Stockmair & Schwanhäusser
(86) International application number: PCT/JP2003/011239
(87) International publication number: WO 2004/040199

(57) **Abstract**

A gas enrichment apparatus containing gas enrichment means and differential pressure generating means, and an air blowing apparatus, having following advantages: The differential pressure generating means makes a reliable startup, and the apparatus can purge the wet air and the dew drop coming from gas enrichment means out of gas flow channel. For implementing the above advantages, it is provided with control unit which operates flow channel gating means linking with startup of differential pressure generating means. And, flow channel gating means is kept to be open for a certain specific time after instruction to suspend the operation is delivered.

## Description

### FIELD OF THE INVENTION

The present invention relates to a gas enrichment apparatus for increasing the concentration of a certain specific gas in relation to the other gas components in the air, and an air blowing apparatus using the gas enrichment apparatus.

### BACKGROUND OF THE INVENTION

Oxygen enrichment apparatus, nitrogen enrichment apparatus, etc., which increase the concentration of a certain specific gas in relation to other gas components by means of gas enrichment means have been known.
Practical examples of such apparatus include oxygen enrichment apparatus for medical use, air conditioner, air purifiers. An example of increasing the oxygen concentration is disclosed in Japanese Patent Laid-Open Application No. H5-113227. Which is a separate type air conditioner; where, oxygen enrichment means is provided in the outdoor unit, and oxygen enriched air is sent via delivery tube to the room unit to be discharged into the room space. Oxygen concentration in the room space, which is the target of air conditioning, is thus raised for the amenity of people there. The above-described conventional example, however, has the following task left to be improved. In the oxygen enrichment process by means of oxygen enrichment membrane, which being one of the gas enrichment means, the oxygen enrichment membrane separates nitrogen gas which occupies a major part of the air, and selectively allows oxygen gas to go through. However, the oxygen enrichment membrane now in practical use allows at least the moisture in the air also to go through, not only the oxygen. Namely, humidity of the air in the secondary side of the oxygen enrichment membrane increases relative to the primary air before the membrane, reflecting the amount of nitrogen component separated from the primary air. Accordingly, dew point of the secondary air goes higher than in the primary air; which often leads to a dew drop in the secondary delivery tube after the membrane.

The dew drop is sometimes discharged in the room space via room unit of air conditioner. The discharged water wets the room to the discomfort of people, or even drops on the people there. In order to prevent this to happen, a conventional example is provided with following countermeasure.

Namely, the room unit is provided with a cooling portion in the flow channel of oxygen enriched air to have the oxygen-rich air cooled, and the moisture contained in the gas is condensed into water there. A water separator is also provided for preventing the water from proceeding to the room space. In the above-described gas enrichment means using selective permeable membrane and absorbent used in the PSA process, the relative humidity naturally increases in the secondary side of separation means, besides it increases the oxygen concentration. Accordingly, the dew point goes higher and the dew drop readily occurs. Depending on operating conditions, decompression pump's operating noise and reversing of dew drop easily occur while it is in the oxygen enrichment operation or the operation is suspended. Furthermore, the conventional technology tends to reveal the following inconvenience: Firstly, in a case where delivery tube for the enriched air is exposed to a cold temperature at least in the secondary side of gas enrichment means (for example, the tube is disposed exposed to the outdoor air, and temperature of the outdoor air goes low), dew drop residing in delivery channel may get iced while the operation is suspended. At the re-start of operation, delivery flow of the oxygen-rich air to room space may be blocked by the ice. Secondly, the dew drop existing in delivery channel is an additional load in itself to the starting of differential pressure generating means. There is a risk that the differential pressure generating means can not make smooth startup. When the ambient or the casing of differential pressure generating means, which being the key part of a gas enrichment apparatus, is in cold state, the lubricant gets stiff in viscosity. Especially in a case where the differential pressure generating means includes a diaphragm pump, whose diaphragm is made of an elastic resin material which functions by making an elastic deformation, the cold temperature deteriorates the elasticity. These cause extra load to the operation of differential pressure generating means. In an extreme case, differential pressure generating means can not start its operation due to overloading. Thirdly, the dew drop in delivery tube readily causes pulse movement with the air flow and burst noise at the stopping of operation. The differential pressure generating means also generates a stopping sound. These sounds would make people uncomfortable from inside and outside of the room.

The present invention addresses the above problems with the conventional technologies, and aims to offer an oxygen enrichment apparatus and an air blowing apparatus containing the oxygen enrichment apparatus; where, water staying in the flow tube of the air enriched with a certain specific gas component can be purged even when the outdoor air temperature is low, and the dew drop residing in the flow tube while operation of the differential pressure generating means is suspended can be reduced to a lowest possible level.

### SUMMARY OF THE INVENTION

A gas enrichment apparatus which includes at least gas enrichment means, differential pressure generating means for generating a differential pressure with the gas enrichment means, a gas flow channel for delivering a second gas which has been enriched with a certain kind of gas component by having a first gas to go through the gas enrichment means, and flow channel gating means for introducing a third gas into the gas flow channel. The flow channel gating means is controlled to make gating operation, or operated to open at variable degrees, linked with startup of the differential pressure generating means.
The present invention further offers an air blowing apparatus, which includes at least gas enrichment means, differential pressure generating means for generating a differential pressure with the gas enrichment means, a gas flow channel for delivering a second gas which gas has been enriched with a certain kind of gas component by having a first gas to go through the gas enrichment means, flow channel gating means for introducing a third gas into the gas flow channel, a discharge outlet for discharging the second gas, and air blowing means for blowing air. The flow channel gating means is operated linked with startup of the differential pressure generating means. The discharge outlet is disposed at a certain location so that the air blown by the air blowing means is mixed with the second gas.

### BRIEF DESCRIPTION OF THE DRAWINGS

FIG. 1 is a perspective view of an air conditioner containing gas enrichment apparatus in accordance with a first exemplary embodiment of the present invention.
FIG. 2 shows an example of control specification in embodiment 1.
FIG. 3 is a time chart used to show the operations of flow channel gating means and decompression pump in embodiment 1.
FIG. 4 is a perspective view of a gas enrichment apparatus in accordance with a second exemplary embodiment of the present invention.
FIG. 5 shows an example of control specification in embodiment 2.
FIG. 6 is a time chart used to show the operations of flow channel gating means and decompression pump in embodiment 2.
FIG. 7 is a perspective view of an air conditioner containing gas enrichment apparatus in accordance with a third exemplary embodiment of the present invention.
FIG. 8 shows an example of control specification in a third and a fourth exemplary embodiments of the present invention.
FIG. 9 is a time chart used to show the operations of flow channel gating means and decompression pump in embodiment 3.
FIG. 10 is a time chart used to show the operations of flow channel gating means, decompression pump and air blower in embodiment 4.
FIG. 11 is a perspective view of a compression pump in a sixth exemplary embodiment of the present invention.

### DESCRIPTION OF THE PREFERRED EMBODIMENTS

Embodiments of the present invention are described below, making reference to the drawings. Where, gas enrichment apparatus is described using an example of oxygen enrichment apparatus applied to a separate type air conditioner for conditioning the air of a room space. However, application of the gas enrichment apparatus is not limited to the above exemplary case, but it can be applied to, for example, air conditioners for vehicles, unitized type air conditioners, air blowing apparatus for air purifiers, oxygen enrichment apparatus for medical and refreshment purposes, portable oxygen enrichment equipment, oxygen enrichment apparatus for combustion facilities, and to nitrogen enrichment apparatus for keeping foodstuff fresh. It can be applied to these fields without any difficulty, and implements the same advantages.

The differential pressure generating means used in gas enrichment apparatus can be either a compression type or a decompression type. In a case where compression type differential pressure generating means is used, suitable gas enrichment means is, for example, a hollow fiber, a zeolite-filled separation means such as the PSA process. On the other hand, where decompression type differential pressure generating means is used, a gas separation membrane of silicone system, etc. is suitable.

### (FIRST EMBODIMENT)

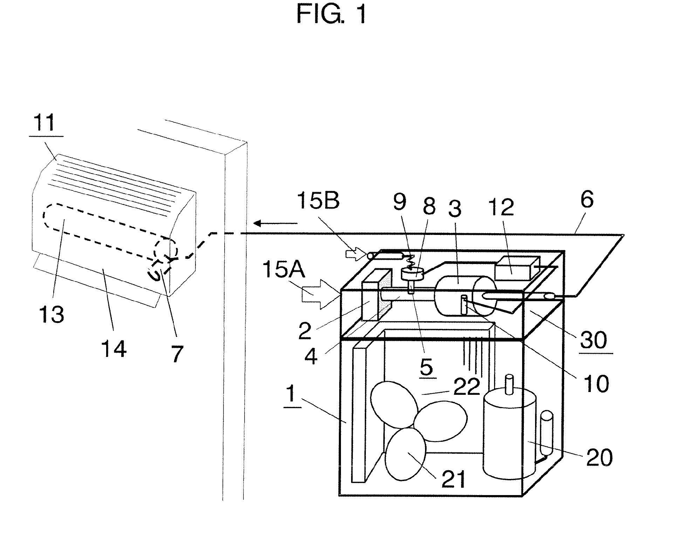

First embodiment is described referring to FIG. 1, FIG. 2 and FIG. 3. As shown in FIG. 1, an air conditioner is consisting of room unit 11 and outdoor unit 1, which are coupled by means of connecting tube (not shown) in which refrigerant gas circulates. Room unit 11 is provided with room fan 13. Outdoor unit 1 includes compressor 20, heat exchanger 22, and outdoor fan 21. An oxygen enrichment membrane is used for the gas enrichment means which increases the concentration of a certain specific gas component. In the present embodiment, oxygen enrichment apparatus 30 is used for the gas enrichment apparatus containing oxygen enrichment membrane. A decompression pump is used for the differential pressure generating means. Oxygen enrichment apparatus 30 includes oxygen enrichment means 2, diaphragm type decompression pump 3 having a resin-made diaphragm, delivery tube 4 which connects oxygen enrichment means 2 and decompression pump 3 to be air-through, branch tube 5 coming from delivery tube 4, and main outlet tube 6 for delivering the oxygen-enriched air to room unit 11. Main outlet tube 6 is connected to the outgoing side of decompression pump 3. It is preferred to provide a fan (not shown) at the primary side (the atmospheric air side) of oxygen enrichment means 2, in order to blow the nitrogen-rich air staying in the neighborhood away. Operation of the fan may be coupled with operation of the oxygen enrichment apparatus. Instead, oxygen enrichment means 2 may be disposed within the outdoor unit's air blowing circuit so that fan 21 of the outdoor unit is used in common for the purpose of blowing the nitrogen-rich air at the primary side of oxygen enrichment means 2 away. In the present embodiment, a gating valve is used for flow channel gating means 8. Branch tube 5 is provided with flow channel gating means 8, e.g. a magnetic two-way valve, and flow resistance member 9, e.g. a capillary tube, disposed in series arrangement. Gating operation of flow channel gating means 8 is controlled by control unit 12. Control unit 12 is provided with temperature sensor 10 for detecting decompression pump's casing temperature T.
Room unit 11 is provided with outlet mouth 7, which discharges the oxygen-rich air delivered via main outlet tube 6 into the inside of room unit 11's cabinet or the vicinity. If outlet mouth 7 is disposed to face the blown air circuit within the cabinet of room unit, the air blown by fan 13 is mixed with the oxygen-rich air and discharged through air blow mouth 14 into a room space which is the target of air conditioning. The structure and the operating principle of refrigeration cycle of the air conditioner are irrelevant to the present invention; so, detailed description on which is eliminated.
Now in the following, the oxygen enrichment operation and the operation related to the present invention in the above-canfigured oxygen enrichment apparatus are described, referring to FIG. 1, FIG. 2 and FIG. 3.

When decompression pump 3 is put into operation, outdoor air, or first gas, is sucked into oxygen enrichment means 2 as indicated with arrow symbol 15A. Oxygen is selectively permeated through an oxygen enrichment membrane or the like item, and the oxygen-rich air, or second gas, proceeds to delivery tube 4. The oxygen-rich second gas is delivered from delivery tube 4, via decompression pump 3 and main outlet tube 6 to room unit. A third gas can be the same as the first gas. For example, in a case where a gas separation membrane is used for the gas enrichment means, first gas permeating the gas separation membrane is the outdoor air which is going through the gas separation membrane. And, flow channel gating means is provided at the sucking side of decompression type differential pressure generating means in parallel with the gas separation membrane.

If it is structured so that the flow channel gating means sucks the outdoor air at the end opposite to the sucking side of decompression type differential pressure generating means, the third gas turns out to be the same as the first gas.

Next, operation of flow channel gating means 8 disposed on branch tube 5 of delivery tube 4 is described. While decompression pump 3 is not in operation, flow channel gating means 8 remains closed. As soon as decompression pump 3 is put into operation, flow channel gating means 8 is opened and starts its gating operation.

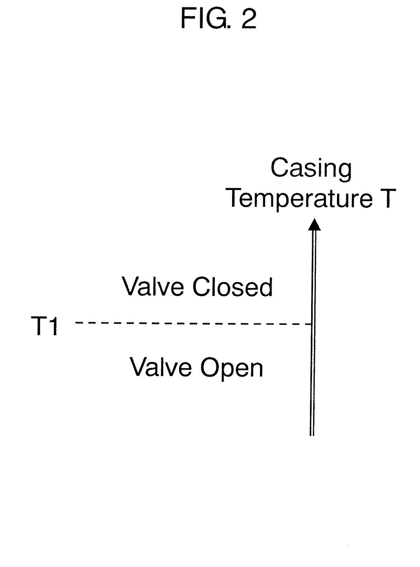

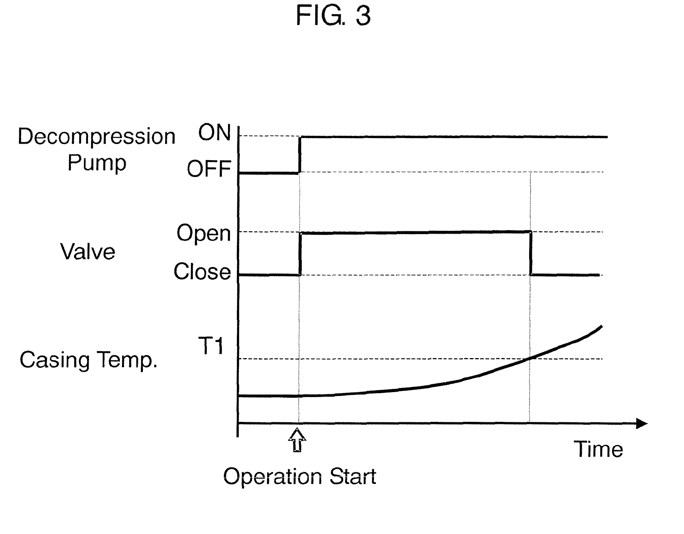

When the differential pressure generating means is started, control unit 12 checks decompression pump 3's casing temperature T, as detected by temperature sensor 10, and compares temperature T with a certain predetermined temperature T1. And the gating operation as shown in FIG. 3 is performed based on control specification of FIG. 2.

The upper area of FIG. 2 represents the higher casing temperature of decompression pump, while the lower area shows that the temperature is lower. If the detected casing temperature T is higher than the certain specific temperature T1, the following operation will follow. Since the flexibility of diaphragm is not deteriorated and the grease in the drive mechanism is not stiff at the start of differential pressure generating means, the starting load is not high. Therefore, it can make a good start with the load as it is, and flow channel gating means 8 remains closed. On the other hand, if the detected casing temperature T is lower than T1, it is inferred that the starting load of decompression pump 3 is heavier. Then, flow channel gating means 8 is made to open, and the outdoor air is introduced direct, as illustrated with arrow symbol 15B, through branch tube 5. As the result, decompression pump 3 can be started with a lighter load (a state where not much differential pressure is generated at the sucking side).

For a certain time after the startup, flow channel gating means 8 still remains open. When the casing temperature is raised to the certain specific temperature T1 as the result of operation of differential pressure generating means , the flow channel gating means is closed, and the operation is switched to start the oxygen enrichment. The flow resistance is lower in the route of branch tube 5 than that in the route of oxygen enrichment means 2. Therefore, when flow channel gating means 8 is opened, the outdoor air is introduced with priority on the route of branch tube 5, not from the route of oxygen enrichment means 2.
Furthermore, the air can be introduced for more volume than the case when it is introduced through oxygen enrichment means 2. As a result, the air flow of increased velocity can easily push the dew drop residing in main outlet tube 6, etc. towards the room unit. The higher velocity air flow expedites evaporation of water, which contributes to reduce the dew drop. Furthermore, even when the water gets iced in the flow channel, the high velocity air flow can push it out towards room unit. The flow channel may have an enlarged portion in the tube just before the air blow mouth in the room unit, which enlarged portion is for pooling the pushed-out ice once and to have it melted and evaporated there. The enlarged portion means a partially enlarged portion of tube. When flow channel gating means 8 is controlled to be open, its open time is varied in accordance with the outdoor air temperature. In this way, decompression pump 3 can be started without fail, and the oxygen-rich air can be delivered to room unit 11 in a reliable manner. In a case where the above-described structure is used in an air conditioner, etc., a temperature sensor of the host apparatus may be used in common also for detecting the outdoor air temperature. Control unit 12 may of course be disposed within a control unit of the air conditioner's outdoor unit.

In the present exemplary embodiment, differential pressure generating means casing temperature is detected and used for the startup control, in order that the startup is made in conformity with the state in the flexibility of diaphragm, the viscosity of grease in the driving section. Instead, the control on flow channel gating means at the startup may be conducted by detecting a space temperature at a point within the apparatus in which the differential pressure generating means is mounted, or ambient temperature of the apparatus, and inferring, based on the temperature, the differential pressure generating means casing temperature. In the present embodiment, flow channel gating means 8 is closed based on casing temperature detected; it is closed when the temperature is acknowledged to have reached certain specific temperature T1.

It may be closed instead based on a certain fixed time after the start of operation. Furthermore, it is preferred to vary the open time of flow channel gating means in accordance with detected temperatures.

### (SECOND EMBODIMENT)

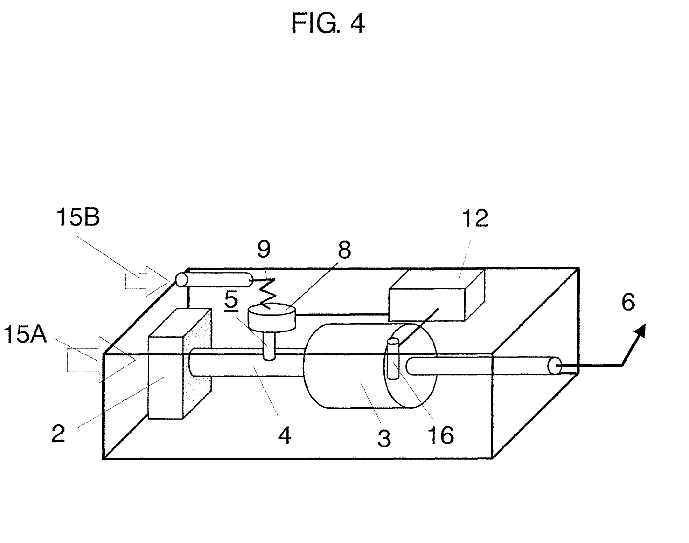

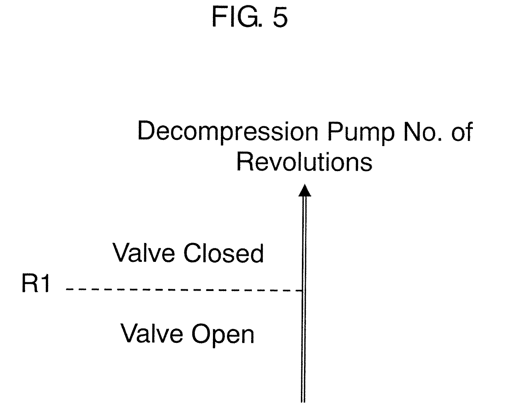

### Second exemplary embodiment is described referring to FIG. 4 and FIG. 5.

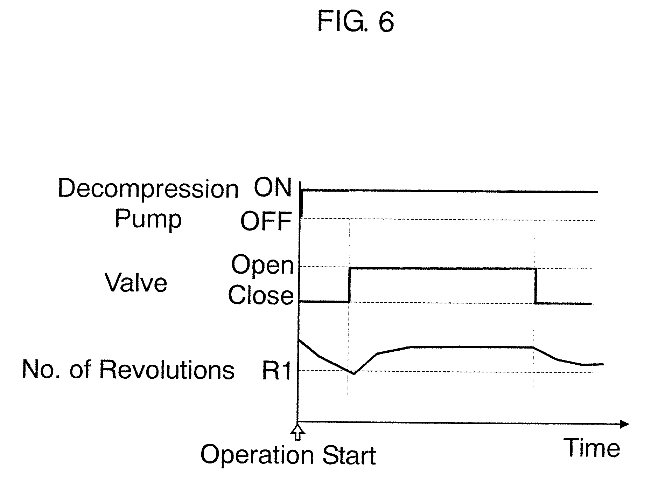

In embodiment 1, the gating operation of flow channel gating means 8 is performed based on the outdoor air temperature in the ambient decompression pump 3. In the present embodiment 2, the operation of flow channel gating means is controlled based on number of revolutions of differential pressure generating means at the startup; control unit 12 controls gating operation of flow channel gating means 8 in accordance with detected number of revolutions. As shown in FIG. 4, revolving number detection unit 16 is provided for detecting the operating status of decompression pump 3. Number of revolutions R detected by revolving number detection unit 16 is compared to a certain predetermined number of revolutions R1. As shown in FIG. 6, flow channel gating means 8 performs gating operation in accordance with control specification of FIG. 5. Operating number of revolutions of differential pressure generating means is high at the beginning, because load of differential pressure generation at the sucking side is low. Along with the increasing negative pressure at the sucking side, the load gradually increases, and water drops start to appear in the outgoing tube 6. As the result, the load increases and the number of revolutions decrease. When the number of revolutions drops to be lower than the certain specified number R1, it is judged that the starting load is high due to blocked delivery tube, etc. Then, flow channel gating means 8 is opened to reduce the load at differential pressure generating means, and introduce a high velocity air flow to push out water drops residing in tube 6. Revolving number detection unit 16 may be either built in decompression pump 3, or provided as an independent component. In place of the number of revolutions of decompression pump 3, the operating current of decompression pump 3, or sucking pressure, or discharging pressure, of decompression pump 3, etc. may be detected for implementing the same effects. In the present exemplary embodiment, the number of revolutions of differential pressure generating means is detected. For the purpose of simplification, the detection means may be eliminated; then, for example, a user gives instruction to control unit 12 and differential pressure generating means operates in accordance with a certain control quantity specified by control unit 12.

### (THIRD EMBODIMENT)

Different from embodiment 1 and embodiment 2, flow channel gating means 8 in the present embodiment 3 uses electrical flow channel gating means (not shown) whose opening operation is variable. The opening operation is varied in accordance with the outdoor air temperature, differential pressure generating means' casing temperature or the operating capacity, etc. The flow channel gating means may be either the one capable of adjusting the opening continuously or the one which performs it on stepping basis. When the opening of flow channel gating means is controlled in accordance with the outdoor air temperature detected by the above-described temperature sensor 10, for example, the opening of flow channel gating means at the apparatus startup is made to be larger for the lower outdoor air temperature. This is because of the intention to secure abundant wind volume needed at least to blow out possible water drops residing in delivery tube 4 out. On the other hand, if the outdoor air temperature is sufficiently high, the possibility of water drops in delivery tube 4 is low. Therefore, the opening of flow channel gating means may be adjusted to be just wide enough to get the differential pressure generating means started, taking the starting load into consideration.
Too wide opening leads to a substantial change in the sound of differential pressure generating means, which makes users uncomfortable. On the contrary, too narrow opening will not provide a fast wind speed that is enough to blow the ice away, although the sound change is small. The opening of flow channel gating means may be controlled instead in accordance with operating capacity of differential pressure generating means. The operating capacity represents the operating number of revolutions, etc. of decompression pump. The apparatus startup is performed based on the decompression pump's number of operating revolutions detected at the starting, or the number of operating revolutions specified for the starting of decompression pump; for example, for the higher number of operating revolutions the wider opening is instructed to the flow channel gating means.

### (FOURTH EMBODIMENT)

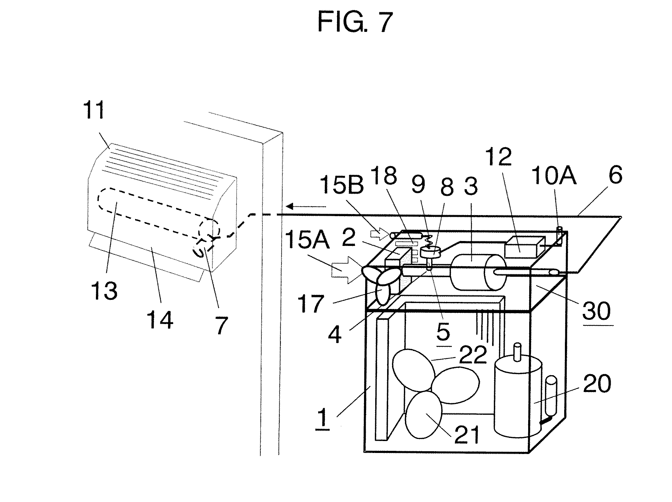

### Fourth embodiment is described referring to FIG. 7, FIG. 8 and FIG. 9.

FIG. 7 shows the structure of a apparatus in accordance with the present invention.

Those portions identical to those of embodiment 1 are represented by using the same symbols, and description on which portions is eliminated. Description here is given only on those points of difference. At the primary side (outdoor air side) of oxygen enrichment means 2, fan 17 is provided and operated coupled with the operation of oxygen enrichment apparatus in order to sweep the nitrogen-rich air in the neighborhood away. Control unit 12 is provided with air temperature sensor 10A for detecting the outdoor air temperature T in the ambient outdoor unit (so-called the outdoor air temperature). The structure and the operation of refrigeration cycle in the air conditioner are irrelevant to the present invention; so, detailed description on which is eliminated here. Now in the following, the operation of oxygen enrichment and the operation related to the present invention in the above-configured oxygen enrichment apparatus are described referring to FIG. 7, FIG. 8 and FIG. 9.

When decompression pump 3 is put into operation, the outdoor air is sucked into oxygen enrichment means 2 as indicated with arrow symbol 15A, and then the oxygen-rich air proceeds to delivery tube 4 to be sucked into decompression pump 3. Thus, the oxygen enriched air is delivered via main outlet tube 6 to the room unit.

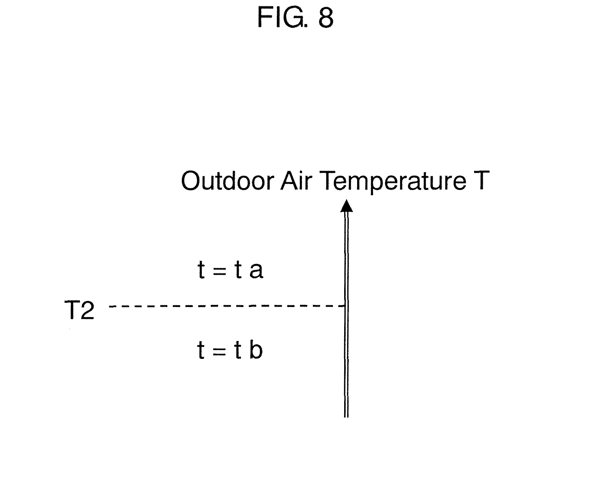

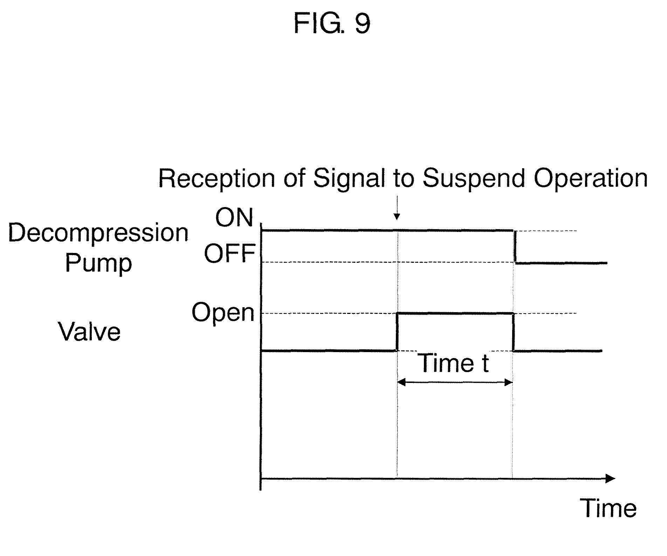

Next, the operation of flow channel gating means 8 disposed on branch tube 5 of delivery tube 4 is described. During the oxygen enrichment operation, flow channel gating means 8 is in closed state. As soon as instruction to stop the oxygen enrichment apparatus is delivered, control unit 12 compares the outdoor air temperature T detected by air temperature sensor 10A to a certain predetermined temperature T2. And then, the gating operation as shown in FIG. 9 is performed in accordance with control specification of FIG. 8.

Reference is made to FIG. 8, based on the comparison of outdoor air temperature T and certain predetermined temperature T2, flow channel gating means 8 is made to be open for a predetermined time t.
If the outdoor air temperature T is lower than the certain predetermined temperature T2, an inference is made that there exists much dew drops in main outlet tube 6, and the time t is determined to be t = tb. On the other hand, if the outdoor air temperature T is higher than the certain predetermined temperature T2, inference is made that there exists least dew drops in main outlet tube 6, or that there is least possibility of getting iced, and the time t is determined to be t = ta. (tb being greater than ta).
Furthermore, there can be a case of ta = 0. Since the outdoor air is introduced direct through branch tube 5, as indicated with arrow symbol 15B, the air sent out to main outlet tube 6 has been mixed with the air having a relatively low humidity, and the state of dew is going to be alleviated. The flow resistance is lower in the route of branch tube 5 than that in the route of oxygen enrichment means 2. Therefore, when flow channel gating means 8 is put into the open state, the outdoor air is introduced with priority on the route of branch tube 5, not on the route of oxygen enrichment means 2. Furthermore, the air can be introduced for more volume than the case where it is introduced through oxygen enrichment means 2, reflecting the lower flow resistance. As a result, the wind speed is increased, and the dew drop staying in main outlet tube 6, etc. can be pushed easily towards the room unit 11. The wind of increased speed contributes also to expedite evaporation of water, to reduce the dew drop. Even when the water gets iced in the flow channel, the high speed wind will be able to push it away towards room unit. The flow channel may have an enlarged portion in the tube just before the air blow mouth in the room unit, which enlarged portion once pools the pushed out ice and dew drop and melts and evaporates it. Branch tube 5 is provided with flow resistance member 9 disposed in series arrangement to flow channel gating means 8. Without flow resistance member 9, when flow channel gating means 8 is opened, a sudden change in the sucking pressure is caused at decompression pump 3, which generates big abnormal sounds. Flow resistance member 9 contributes to reduce the sudden change in the pressure, which is advantageous for the anti-noise consideration. The flow resistance member 9 used here has a smaller air passing resistance(flow resistance) than that of oxygen enrichment means 2. Furthermore, in a case where the above configuration is applied to an air conditioner, a temperature sensor of its own may be used in common also for detecting the outdoor air temperature. Or, control unit 12 may of course be disposed integrated within control unit of the air conditioner's outdoor unit.

### (FIFTH EMBODIMENT)

The structure of a apparatus in accordance with fifth embodiment remains the same as that in embodiment 4; so, description on which is eliminated here. In the following, the operation in embodiment 5 is described referring to FIG. 7, FIG. 8 and FIG. 10.

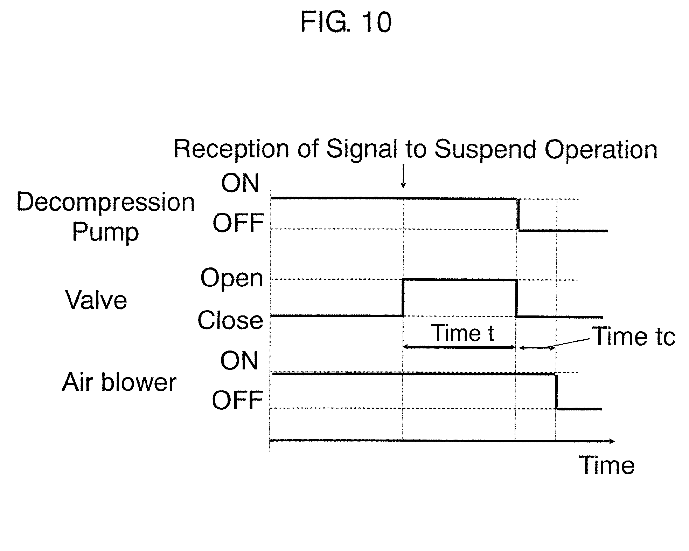

Reference is made to FIG. 7, at the primary side (outdoor air side) of oxygen enrichment means 2, fan 17 for sweeping the nitrogen-rich air staying in the neighborhood away (hereinafter referred to as fan 17) is provided. Fan 17 is put into operation while it is in the oxygen enrichment operation. In a case where outdoor fan 21 is used in common for fan 17, outdoor fan 21 is put into operation. In the same manner as in embodiment 4, as soon as instruction to stop the oxygen enrichment apparatus is delivered, control unit 12 compares the outdoor air temperature T detected by air temperature sensor 10A to the certain predetermined temperature T2. Then, the gating operation as shown in FIG. 10 is performed in accordance with control specification of FIG. 8. Based on the comparison of outdoor temperature T and the certain specific temperature T2, flow channel gating means 8 is made to open for the certain specific time t. When, since the outdoor air is introduced direct from branch tube 5, there is no need of operating fan 17 for sweeping the nitrogen-rich air residing at the primary side (outdoor air side) of oxygen enrichment means 2. However, operation of fan 17 is continued for the purpose of masking the noise of differential pressure generating means. In the case where outdoor fan 21 is used in common for fan 17, outdoor fan 21 continues its operation. After operating for the certain specific time t, differential pressure generating means stops, but fan 17 further continues its operation for a certain fixed time, or for a variable duration of time that varies depending on the outdoor air temperature, tc, for the purpose of masking the noises due to dew drop remaining in the flow channel and stopping pump. The time tc may be varied instead in accordance with the outdoor air temperature T. Alike in the earlier exemplary case, outdoor fan 21 continues its operation in a case where the outdoor fan 21 is used in common for fan 17. In either one of the above cases, and even in a case where fan 17 and outdoor fan 21 are not used in common for each other, operation of fan 17 alone, operation of outdoor fan 21 alone, or operation of both fan 17 and outdoor fan 21 provides the same noise masking effects.

### (SIXTH EMBODIMENT)

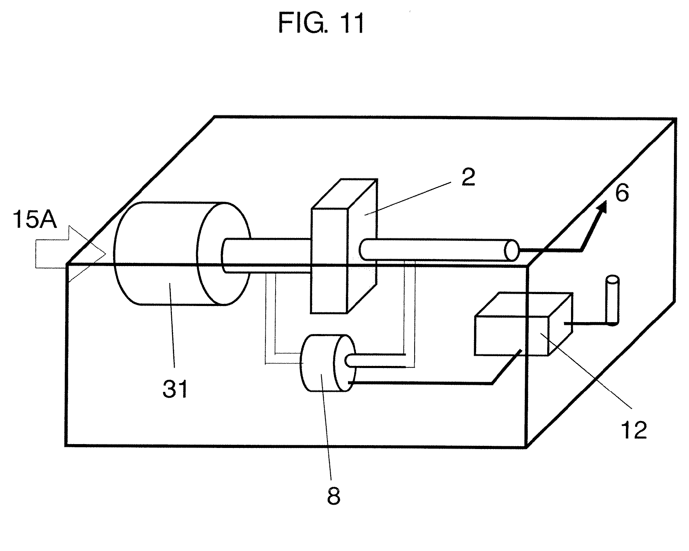

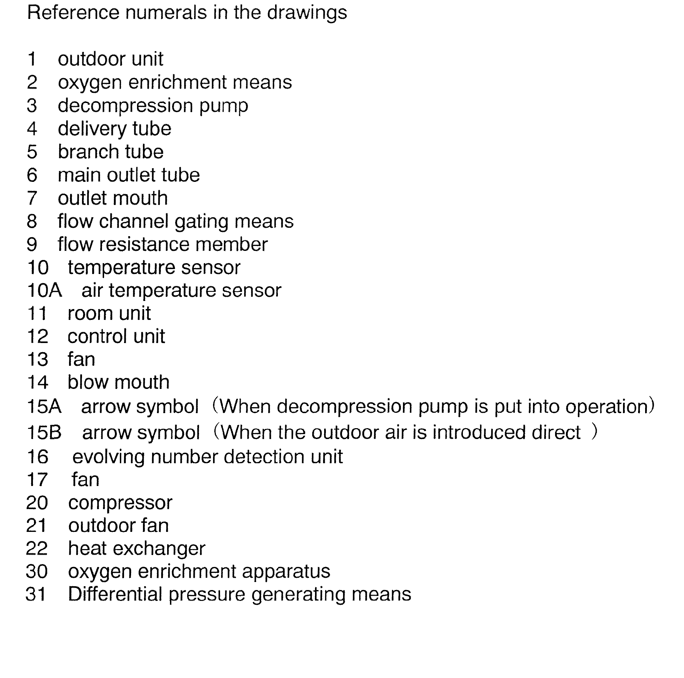

FIG. 11 shows the structure in key portion of a differential pressure generating means in accordance with a sixth exemplary embodiment. Those constituent portions identical to those of embodiment 1 are represented by using the same symbols, and description on which portions is eliminated. Differential pressure generating means 31 in the present embodiment 6 uses a compression pump which provides oxygen enrichment means 2 at one side with a pressure so that the air is pushed into it. Flow channel gating means 8 is disposed in parallel with gas enrichment means 2. The above-described configuration also offers the same effects as the case in which decompression means is used.
An air blowing apparatus can be formed by combining at least gas enrichment means, differential pressure generating means for generating a differential pressure with the gas enrichment means, a gas flow channel for delivering a second gas which has been enriched with a certain kind of gas component by having a first gas to go through the gas enrichment means, flow channel gating means for introducing a third gas into the gas flow channel, an outlet mouth for discharging the second gas, and air blowing means for blowing the air. In which, the flow channel gating means is controlled in relation to startup of the differential pressure generating means , and the outlet mouth is disposed so that the air blown by the air blowing means is mixed with the second gas.

### INDUSTRIAL APPLICABILITY

The present invention aims to offer a gas enrichment apparatus, in which the load at the startup of differential pressure generating means is alleviated for insuring a stable operation. An air blowing apparatus containing the gas enrichment apparatus is also presented.
Furthermore, a gas enrichment apparatus in the present invention controls the flow channel gating means to be open for a certain time after instruction to stop operation of the gas enrichment apparatus is delivered, in order to dry and purge the dew drop sticking on the inner wall surface of flow channel tube. An air blowing apparatus containing the gas enrichment apparatus is also presented.

## Claims

1. A gas enrichment apparatus comprising at least
gas enrichment means,
differential pressure generating means for generating a differential pressure with said gas enrichment means,
a gas flow channel for delivering a second gas which has been enriched with a certain kind of gas component by having a first gas to go through said gas enrichment means, and
flow channel gating means for introducing a third gas into said gas flow channel, wherein
said flow channel gating means is controlled to make gating operation or to open at variable degrees linked with startup of said differential pressure generating means.

2. The gas enrichment apparatus of claim 1, wherein
said differential pressure generating means is decompression means which decompresses said gas enrichment means at one side so that said first gas is sucked into said gas enrichment means.

3. The gas enrichment apparatus of claim 1, wherein
said differential pressure generating means is compression means which compresses said gas enrichment means at one side so that said first gas is pushed into said gas enrichment means.

4. The gas enrichment apparatus recited in one of claims 1 through 3, wherein
said flow channel gating means is controlled to be open for a certain specific time at the startup of said differential pressure generating means

5. The gas enrichment apparatus recited in one of claims 1 through 3 comprising temperature detection means, wherein
said flow channel gating means is controlled based on temperature information detected by said temperature detection means at the startup of said differential pressure generating means .

6. The gas enrichment apparatus of claim 5, wherein
the temperature information detected by said temperature detection means is temperature of said differential pressure generating means' casing.

7. The gas enrichment apparatus of claim 5, wherein
the temperature information detected by said temperature detection means is the ambient air temperature of gas enrichment apparatus.

8. The gas enrichment apparatus recited in one of claims 1 through 3, wherein
said flow channel gating means is controlled based on operating capacity designated to said differential pressure generating means at the startup.

9. The gas enrichment apparatus recited in one of claims 1 through 3, wherein
said flow channel gating means is controlled based on operating capacity of said differential pressure generating means detected after said differential pressure generating means is started.

10. A gas enrichment apparatus comprising at least
gas enrichment means,
differential pressure generating means for generating a differential pressure with said gas enrichment means,
a gas flow channel for delivering a second gas which has been enriched with a certain kind of gas component by having a first gas to go through said gas enrichment means, and
flow channel gating means for introducing a third gas into said gas flow channel, wherein
said flow channel gating means is controlled to be open for a certain specific time after instruction is delivered to suspend the operation.

11. The gas enrichment apparatus of claim 10, wherein
said certain specific time is at least a time span after the instruction to suspend the operation of gas enrichment operation is delivered until said differential pressure generating means stops.

12. The gas enrichment apparatus of claim 10, wherein
operation of air blowing means attached to the apparatus is maintained for at least said certain specific time.

13. The gas enrichment apparatus of claim 10 comprising temperature detection means for detecting the outdoor air temperature in the ambient gas enrichment means, wherein
said certain specific time is varied in accordance with the air temperature detected by said temperature detection means.

14. The gas enrichment apparatus recited in one of claims 1 through 3, wherein
said flow channel gating means or a flow channel connected through it is provided with a flow resistance member.

15. An air blowing apparatus comprising at least
gas enrichment means,
differential pressure generating means for generating a differential pressure with said gas enrichment means,
a gas flow channel for delivering a second gas which has been enriched with a certain kind of gas component by having a first gas to go through said gas enrichment means,
flow channel gating means for introducing a third gas into said gas flow channel,
an outlet mouth for discharging said second gas, and
air blowing means for blowing the air, wherein
said flow channel gating means is controlled linked with startup of said differential pressure generating means , and
said outlet mouth is disposed in an arrangement so that the air delivered by said air blowing means is mixed with said second gas.

16. The air blowing apparatus of claim 15, wherein
said differential pressure generating means is decompression means which decompresses said gas enrichment means at one side so that said first gas is sucked into said gas enrichment means.

17. The air blowing apparatus of claim 15, wherein
said differential pressure generating means is compression means which compresses said gas enrichment means at one side so that said first gas is pushed into said gas enrichment means.

18. The air blowing apparatus recited in one of claims 15 through 17, wherein
said flow channel gating means is controlled to be open
for a certain specific time at the startup of said differential pressure generating means .

19. The air blowing apparatus recited in one of claims 15 through 17 comprising temperature detection means, wherein
said flow channel gating means is controlled based on temperature information detected by said temperature detection means at the startup of said differential pressure generating means .

20. The air blowing apparatus of claim 19, wherein
the temperature information detected by said temperature detection means is the temperature of said differential pressure generating means ' casing.

21. The air blowing apparatus of claim 19, wherein
the temperature information detected by said temperature detection means is the outdoor air temperature in the ambient gas enrichment apparatus.

22. The air blowing apparatus recited in one of claims 15 through 17, wherein
said flow channel gating means is controlled based on operating capacity designated to said differential pressure generating means at the startup.

23. The air blowing apparatus recited in one of claims 15 through 17, wherein
said flow channel gating means is controlled based on operating capacity of said differential pressure generating means detected after said differential pressure generating means is started.

24. An air blowing apparatus comprising at least gas enrichment means,
differential pressure generating means for generating a differential pressure with said gas enrichment means,
a gas flow channel for delivering a second gas which has been enriched with a certain kind of gas component by having a first gas to go through said gas enrichment means, and
flow channel gating means for introducing a third gas into said gas flow channel, wherein
said flow channel gating means is controlled to be open for a certain specific time after instruction to suspend the operation is delivered.

25. The air blowing apparatus of claim 24, wherein
said certain specific time is at least a time span after the instruction to suspend the operation of gas enrichment operation is delivered until said differential pressure generating means stops.

26. The air blowing apparatus of claim 24, wherein
operation of air blowing means attached to the apparatus is maintained for at least said certain specific time.

27. The air blowing apparatus of claim 24 comprising temperature detection means for detecting the outdoor air temperature in the ambient gas enrichment means, wherein
said certain specific time is varied in accordance with the air temperature detected by said temperature detection means.

28. The air blowing apparatus recited in one of claims 15 through 17, wherein
said flow channel gating means or a flow channel connected through it is provided with a flow resistance member.
